# EUROPÄISCHE PATENTSCHRIFT

(11) **EP 0 840 683 B1**
(45) Veröffentlichungstag und Bekanntmachung des Hinweises auf die Patenterteilung: **28.07.1999**
(21) Anmeldenummer: 96909063.8
(22) Anmeldetag: 18.04.1996
(51) Int. Cl.: B60T 8/00, B60T 13/74

(54) **ELEKTROMOTORISCHE RADBREMSE FÜR FAHRZEUGE**
ELECTRIC MOTOR WHEEL BRAKE FOR VEHICLE
FREIN SUR ROUE A MOTEUR ELECTRIQUE POUR VEHICULE

(30) Priorität: 21.07.1995 DE 19526645
(43) Veröffentlichungstag der Anmeldung: 13.05.1998
(73) Patentinhaber: ROBERT BOSCH GMBH, 70442 Stuttgart (DE)
(72) Erfinder: MAISCH, Wolfgang, D-71701 Schwieberdingen (DE)
(86) Internationale Anmeldenummer: DE9600676
(87) Internationale Veröffentlichungsnummer: WO9703869

(56) Entgegenhaltungen:
- EP-A- 0 129 969
- EP-A- 0 170 478
- EP-A- 0 486 281
- WO-A-92/21542
- DE-A- 3 410 006
- DE-A- 3 444 301
- US-A- 4 784 244
- US-A- 4 995 483
- US-A- 5 234 262

## Beschreibung

### Stand der Technik

Die Erfindung betrifft eine elektromotorische Radbremse für Fahrzeuge nach dem Oberbegriff des unabhängigen Patentanspruchs (aus US 4,995,483 A).

Elektromotorische Radbremsen für Fahrzeuge sind bekannt. So wird beispielsweise in der WO-A 94/24453 eine Radbremse beschrieben, bei welcher die Zuspannkraft durch einen Elektromotor erzeugt wird. Wird die Bremsanlage eines Fahrzeugs mit derartigen elektromotorischen Radbremsen aufgebaut, ist ein besonderes Augenmerk auf eine zuverlässige Funktion einer solchen Bremsanlage zu richten, so daß bei Bremsungen im Teilbremsbereich die Fahrstabilität des Fahrzeugs gewährleistet ist.

In diesem Zusammenhang zeigt das gattungsbildende US-Patent 4,995,483 eine Steuereinheit für eine elektromotorische Bremsanlage, der Informationen über das wirkende Bremsmoment bzw. die wirkende Bremskraft und Informationen über wenigstens ein dem Steller eingesteuertes Signal vorliegen. Diese Informationen werden zur Steuerung der Radbremsen ausgewertet. Eine Fehlerermittlung findet nicht statt.

Ferner zeigt die EP-A 486,281, zur Fehlererkennung die über den Motor abfallende Spannung zu ermitteln und mit vorgegebenen Grenzwerten zu vergleichen. Bei Überschreiten der Grenzwerte wird ein Fehler erkannt. Mit dieser Vorgehensweise werden möglicherweise Fehlerzustände des Motors selbst zuverlässig ermittelt. Andere Fehlfunktionen, z.B. ein Fehler in der Meßwerterfassung des Bremsmoments bzw. der Bremskraft, können nicht erkannt werden.

Es ist Aufgabe der Erfindung, die Fehlerüberwachung insbesondere mit Blick auf die Bremsmomenten- bzw. Bremskrafterfassung bei einer elektromotorischen Bremsanlage zu verbessern.

Dies wird durch die kennzeichnenden Merkmale der unabhängigen Patentansprüche erreicht.

### Vorteile der Erfindung

Es wird eine Bremsanlage mit elektromotorischer Zuspannung geschaffen, welche auch im Teilbremsbereich die Fahrstabilität des Fahrzeugs gewährleistet.

Besonders vorteilhaft dabei ist, daß eine zuverlässige und fehlertolerante Ermittlung des Bremsmoments bzw. der Bremskräfte an den Rädern möglich ist. Dies wiederum führt in vorteilhafter Weise zu einer gleichmäßigen Abnutzung der Bremsen.

Besondere Vorteile zeigen sich beim Einsatz von Schrittmotoren oder elektronisch kommutierten Motoren, bei welchen durch Anpassungen des Punktes des Bremsenanlegens und -lösens an allmähliche Veränderungen Toleranzeinflüsse und Verschleiß kompensiert werden.

Besonders vorteilhaft ist, daß eine sichere Überwachung von Sensoren zur Erfassung der Bremskräfte bereitgestellt wird, mit der ein eventuell fehlerhaftes Element erkannt werden kann.

Weitere Vorteile ergeben sich aus der nachfolgenden Beschreibung von Ausführungsbeispielen sowie aus den abhängigen Patentansprüchen.

### Zeichnung

Die Erfindung wird nachstehend anhand der in der Zeichnung dargestellten Ausführungsformen näher erläutert. Figur 1 zeigt ein Übersichtsschaltbild einer Bremsanlage mit elektromotorischer Zuspannung der Bremsen. In den Figuren 2 und 3 werden anhand von Flußdiagrammen Hinweise auf eine Realisierung der sicheren und fehlertoleranten Ermittlung des Bremsmoments bzw. der Bremskräfte an den Rädern gegeben, während im Flußdiagramm nach Figur 4 beim Einsatz von Schritt- oder elektronisch kommutierten Motoren Maßnahmen zur Anpassung des Anlege- und Lösepunktes der Bremsen an allmähliche Veränderungen dargestellt sind.

### Beschreibung von Ausführungsbeispielen

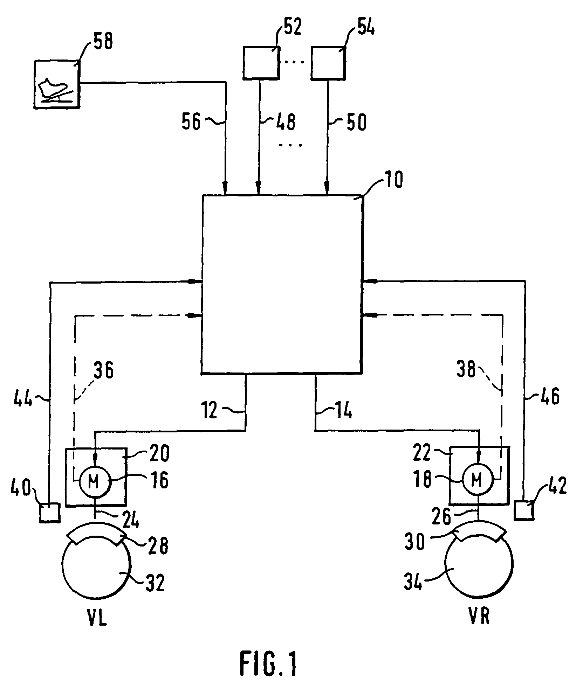

Figur 1 zeigt ein Übersichtsblockschaltbild einer Bremsanlage eines Fahrzeugs mit elektromotorischer Zuspannung am Beispiel einer Achse. Dabei ist mit 10 ein elektronisches Steuergerät dargestellt, welches über die Ausgangsleitungen 12 und 14 Elektromotoren 16 und 18 ansteuert. Die elektrischen Motoren sind dabei Teil von Bremsenstellern 20 bzw. 22, die über mechanische Verbindungen 24 bzw. 26 auf die Bremseinrichtung 28 bzw. 30 der Räder 32 bzw. 34 einwirken. Eine entsprechende Anordnung findet sich an weiteren Achsen des Fahrzeugs. Im bevorzugten Ausführungsbeispiel handelt es sich bei den elektrischen Motoren 16 bzw. 18 um Gleichstrommotoren. In diesem Fall wird, wie strichliert dargestellt, eine den durch die Motoren fließenden Strom repräsentierenden Größe über die Leitung 36 bzw. 38 der Steuereinheit 10 zugeführt. Diese Größe wird dabei in bekannter Weise beispielsweise mittels eines gegen Masse geschalteten Widerstandes in der H-Brückenendstufe für den Gleichstrommotor ermittelt. Ferner sind Kraftsensoren 40 bzw. 42 vorgesehen, deren Signal über die Leitungen 44 bzw. 46 der Steuereinheit 10 zugeführt werden. Diese Kraftsensoren ermitteln die Abstützkräfte der Bremsensteller und ermitteln auf diese Weise ein Maß für die wirkenden Bremskräfte bzw. Bremsmomente. Im bevorzugten Ausführungsbeispiel handelt es sich bei diesen Sensoren um Dehnungsmeßstreifen. In anderen vorteilhaften Ausführungsbeispielen wird über Sensoren die Anpreßkraft der Bremsbeläge (z.B. piezo-elektrische Sensoren) oder als indirektes Maß für die Bremskraft bzw. die Bremsmomente die Bewegung der Bremsbeläge oder eines Betätigungshebels der Radbremse (z.B. Wegsensoren) ermittelt.

Der Vollständigkeit halber sind in Figur 1 Eingangsleitungen 48 bis 50 dargestellt, die die Steuereinheit 10 mit Meßeinrichtungen 52 bis 54 verbinden. Diese erfassen weitere Betriebsgrößen des Fahrzeugs bzw. der Bremsanlage, wie Radgeschwindigkeiten, die Drehzahl der Antriebseinheit, etc., die für die Steuerung der Bremsanlage notwendig sind. Ferner ist eine Eingangsleitung 56 vorgesehen, welche die Steuereinheit 10 mit einer Meßeinrichtung 58 zur Erfassung des Fahrerwunsches, insbesondere zur Erfassung der Stellung eines vom Fahrer betätigbaren Bremspedals, verbindet.

In einem vorteilhaften Ausführungsbeispiel werden anstelle von Kommutator-Gleichstrommotoren Schrittmotoren oder elektronisch kommutierte Motoren eingesetzt. Bei derartigen Motortypen wird auf die Erfassung und Zuführung des Motorstromes verzichtet, da anhand der ausgeführten Schrittzahl eine entsprechende Größe zur Verfügung steht.

Die Steuereinheit 10 erfaßt über die Leitung 56 den Fahrerwunsch. Diesen setzt sie anhand von für jede Radbremse oder Gruppen von Radbremsen vorprogrammierten Kennfeldern in Sollwerte für die einzelnen Radbremsen um. Diese Sollwerte entsprechen beispielsweise einzustellenden Bremsmomenten oder Bremskräften, die im Rahmen eines entsprechenden Regelkreises durch Ansteuerung der Elektromotoren der Radbremsen eingestellt werden. Die Zuordnung des Fahrerwunsches zu den Sollwerten ist dabei in einem vorteilhaften Ausführungsbeispiel abhängig von Parametern wie Achslasten, Bremsbelagsverschleiß, Bremsentemperatur, Reifendruck, etc., deren Größe über die Leitungen 48 bis 50 der Steuereinheit 10 zugeführt werden. Ferner führt die Steuereinheit 10 im Rahmen von Sonderbremszuständen die an sich bekannten Antiblockierschutzregelfunktionen bzw. Antriebsschlupfregelfunktionen auf der Basis der zugeführten Radgeschwindigkeiten durch.

Wichtig bei derartigen Bremsanlagen, bei denen die Radbremsen einzeln mit Fremdkraft betätigt werden, ist, daß mit Blick auf die Fahrstabilität die Bremskräfte der Fahrzeugräder so eingestellt werden, daß das Fahrzeug nicht schief zieht und daß die Bremsen möglichst gleichmäßig abgenutzt werden. Es ist deshalb erforderlich, daß die an den Rädern wirkenden Bremskräfte bzw. Bremsmomente erfaßt werden. Da die Erfassung dieser Bremskräfte bzw. Bremsmomente direkt die Bremswirkung des Fahrzeugs beeinflußt, ist es dabei wesentlich, daß die Bremsmomente bzw. Bremskräfte zuverlässig und fehlertolerant ermitttelt werden.

Grundgedanke der vorliegenden erfindungsgemäßen Vorgehensweise ist, daß der elektronischen Steuereinheit zur Steuerung der Radbremsen eine Information bezüglich des wirkenden Bremsmoments bzw. der wirkenden Bremskraft und eine Information bezüglich der dem Steller eingesteuerten Signale zugeführt wird. Aus der letztgenannten Information läßt sich eine Information bezüglich des wirkenden Bremsmoments bzw. der wirkenden Bremskraft ableiten, so daß für jede Radbremse zwei Informationen für das Bremsmoment bzw. die Bremskraft zur Verfügung stehen.

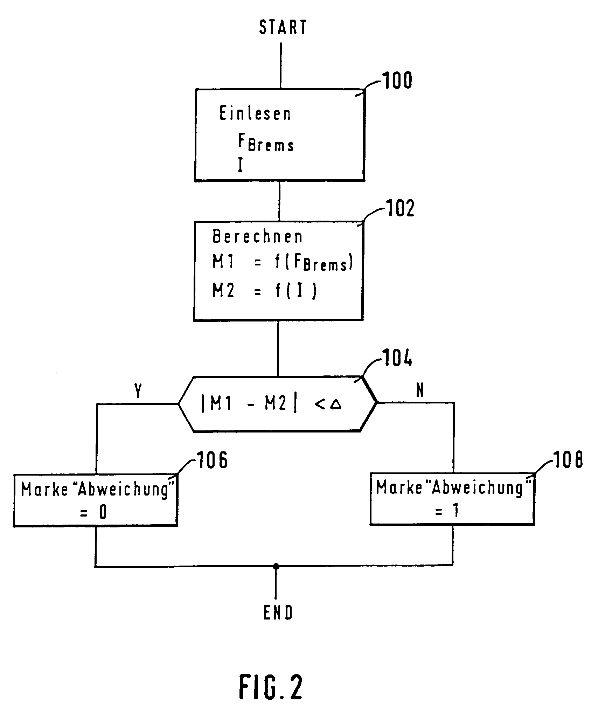

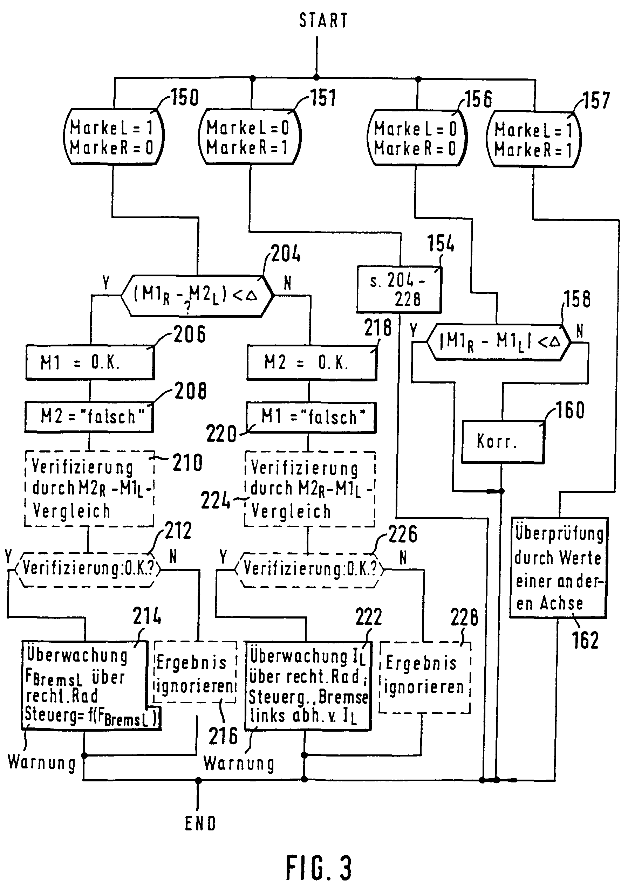

Ein bevorzugtes Ausführungsbeispiel ist anhand der Flußdiagramme der Figuren 2 und 3 dargestellt. Grundgedanke dieser Vorgehensweise ist, daß der Steuereinheit 10 von jeder Radbremse eine über den Kraft- oder Bewegungssensor ermittelte Größe sowie eine den Motorstrom bzw. bei Schrittmotoren oder elektrisch kommutierten Motoren die Schrittzahl repräsentierende Größe zugeführt wird. Dabei wird in vorteilhafter Weise das Signal eines Kraft- bzw. Bewegungssensors mit dem auf der Basis der stellerspezifischen Größe ermittelten Antriebsmoment des Stellmotors für eine Radbremse miteinander kombiniert. Die beiden Signalgrößen werden auf unplausible Abweichungen überprüft. Daneben stehen dem Steuergerät 10 bei Normalbremsungen, außerhalb der ABS-Bremsung oder anderer Zusatzfunktionen, die entsprechenden Signalgrößen der Räder derselben Achse und/oder der anderen Achse bzw. Achsen zur Verfügung.

Mit anderen Worten ist die Steuereinheit 10 in die Lage versetzt, aus zumindest vier Signalgrößen, die das gleiche bzw. ein ähnliches Bremsmoment bzw. die gleiche bzw. eine ähnliche Bremskraft (da im allgemeinen die Hinterachsbremskraft niedriger als die Vorderachsbremskraft ist) repräsentieren, unzulässige Abweichungen zu ermitteln und bei Vorliegen solcher unzulässigen Abweichungen Korrekturen vorzunehmen bzw. das fehlerhafte Element zu ermitteln. Diese Erkenntnis wird dann in Stellbefehle für die Radbremsen (bei Abweichungen zwischen den Radbremsen) umgesetzt und ggf. ein Warnsignal (bei Abweichungen innerhalb einer Radbremse) ausgegeben oder eine Radbremse beeinflußt, erforderlichenfalls auch abgeschaltet.

Die in den Figuren 2 und 3 skizzierten Flußdiagramme geben Hinweise auf eine Umsetzung dieses Grundgedankens in ein Rechenprogramm. Dabei kann die Vorgehensweise nach Figur 2 in einem Ausführungsbeispiel auch allein ohne die in Figur 3 skizzierte Vorgehensweise eingesetzt werden.

Der in Figur 2 dargestellte Programmteil wird während eines Bremsvorgangs zu vorbestimmten Zeitpunkten eingeleitet. Ein Bremsvorgang wird dabei beispielsweise bei Schließen eines Bremspedalschalters erkannt. Nach Start des Programmteils, der nacheinander für jede Radbremse durchgeführt wird, werden in einem ersten Schritt 100 die Signalwerte des Kraftsensors Fbrems sowie die stellerspezifische Signalgröße I eingelesen. Im bevorzugten Ausführungsbeispiel handelt es sich bei der Bremskraftgröße um ein Maß für die Abstützkraft des Bremsenstellers, während die stellerspezifische Größe den durch den Elektromotor fließenden Strom oder die ermittelte Schrittzahl darstellt. Im darauffolgenden Schritt 102 werden anhand von Kennlinien die zugeführten Signalwerte in Brems- bzw. Antriebsmomentenwerte umgerechnet. Dabei entspricht die vom Kraftsensor erfaßte Abstützkraft einem Bremsmomentenwert M1 unter Berücksichtigung der Bremsenauslegung, während auf der Basis des Stromes oder der Schrittzahl anhand eines vorbestimmten Kennfeldes das Antriebsmoment des Motors M2 bestimmt wird. Im darauffolgenden Abfrageschritt 104 wird der Betrag der Differenz zwischen diesen beiden Momentenwerte mit einem vorgegebenen Toleranzwert Δ verglichen. Dieser Wert berücksichtigt die bei der Umrechnung der Meßwerte in Momentenwerte vorhandene Toleranz. Ist der Betrag der Differenz der Momentenwerte kleiner als der Toleranzwert, wird im Schritt 106 eine Marke "Abweichung" auf den Wert 0 gesetzt, während bei unplausiblen Abweichungen, wenn der Betrag der Differenz größer als der Toleranzwert ist, die Marke gemäß Schritt 108 auf den Wert 1 gesetzt wird. Danach wird der Programmteil beendet und ggf. der in Figur 3 dargestellte Programmteil durchgeführt.

Die in Figur 2 und 3 dargestellten Programmteile können außer bei Normalbremsungen auch bei ABS und anderen Zusatzfunktionen durchgeführt werden.

Der in Figur 3 dargestellte Programmteil wird im bevorzugten Ausführungsbeispiel im Anschluß an die Programmteile nach Figur 2 eingeleitet. Dabei liegen die für jede Radbremse gebildeten Momentenwerte vor. Nach Figur 3 werden je nach Kombination der Werte der Marken für die linke und die rechte Radbremse einer Achse verschiedene Programmteile eingeleitet. Ist z.B. am linken Rad eine unplausible Abweichung erkannt worden (MarkeL auf dem Wert 1), während am rechten Rad derselben Achse keine unplausible Abweichung vorliegt (MarkeR Null) (150), wird im bevorzugten Ausführungsbeispiel im Schritt 204 der Betrag der Differenz des Bremsmoments M1 am rechten Rad und des Antriebsmoments M2 am linken Rad gebildet und mit einem vorgegebenen Toleranzwert Δ verglichen. Dieser Wert berücksichtigt wie oben dargestellt Toleranzen im Bereich der Radbremsen. Ist der Betrag der Differenz kleiner als der Toleranzwert, wird gemäß Schritt 206 davon ausgegangen, daß die Erfassung der Bremskraft am linken Rad in Ordnung ist, während gemäß Schritt 208 die Bestimmung des Antriebsmoments M2 am linken Rad möglicherweise falsch ist. In einem bevorzugten Ausführungsbeispiel wird gemäß Schritt 214 der aus dem Motorstrom abgeleitete Momentenwert als fehlerhaft betrachtet, die Steuerung der linken Radbremse ausschließlich auf der Basis des Bremskraftsignals durchgeführt und die Überwachung dieses Signals entsprechend Schritt 204 durch Vergleich mit dem aus dem Motorstrom oder aus dem Bremskraftwert der rechten Radbremse abgeleiteten Momentenwert durchgeführt. Ferner wird der Fahrer durch ein Warnsignal auf die Unstimmigkeit hingewiesen.

Es ergibt sich jedoch in einer vorteilhaften Ergänzung die Möglichkeit, das Ergebnis der Schritte 206 und 208 zu verifizieren, da vier das gleiche Moment angebende Größen an einer Achse vorliegen. Daher wird in einem vorteilhaften Ausführungsbeispiel im Schritt 210 ein Vergleich des aus dem Motorstrom oder der Motorschnittzahl des rechten Rades abgeleiteten Momentenwerts mit dem aus der Bremskrafterfassung am linken Rad abgeleiteten Momentenwerts durchgeführt. Ist im Abfrageschritt 212 das Ergebnis der Schritte 206 und 208 bestätigt, werden gemäß Schritt 214 die oben dargestellten Maßnahmen eingeleitet. Hat die Verifizierung das Ergebnis der Schritte 206 und 208 nicht betätigt, so wird gemäß Schritt 216 das Ergebnis zunächst ignoriert und in einem vorteilhaften Ausführungsbeispiel bei Auftreten mehrerer Unstimmigkeiten nacheinander eine Fehlermeldung erzeugt. Danach wird der Programmteil beendet und in Verbindung mit Figur 2 wiederholt.

Wurde im Abfrageschritt 204 ermittelt, daß der Betrag der Differenz der beiden Werte größer als der vorgegebene Toleranzbereich ist, wird gemäß Schritt 218 davon ausgegangen, daß der Momentenwert, welcher aus dem Motorstrom abgeleitet wurde, richtig ist und gemäß Schritt 220 der aus der erfaßten Bremskraft abgeleitete Momentenwert falsch ist. Dies führt gemäß Schritt 222 im bevorzugten Ausführungsbeispiel zu einer Steuerung der linken Radbremse abhängig vom Momentenwert, der aus dem Motorstrom abgeleitet wurde. Die Überwachung dieses Momentenwerts erfolgt dabei über die entsprechenden Werte des rechten Rades, wobei auch in diesem Fall bei Unstimmigkeiten anhand einer sogenannten Zwei-Aus-Drei-Auswahl das fehlerhafte Signal ermittelt und isoliert werden kann. Ferner wird auch hier ein Warnsignal erzeugt. Entsprechend den Schritten 210, 212 und 216 ist auch hier gemäß den Schritten 224, 226 und 228 eine Verifizierung des Ergebnisses anhand des Vergleichs der aus dem Motorstrom abgeleiteten Momentenwerts des rechten und dem aus der Bremskraft abgeleiteten Momentenwert des linken Rades vorteilhaft.

Ist die Marke der linken Radbremse Null, die der rechten Radbremse 1 (151), werden entsprechend Schritt 154 die den Schritten 204 bis 228 entsprechenden Schritte ausgeführt.

Weisen beide Marken den Wert Null auf (156), so kann von einer korrekten Erfassung der Bremsmomente an den Radbremsen einer Achse ausgegangen werden. Es bleibt allerdings eine Unsicherheit bezüglich Abweichungen zwischen den Radbremsen, die auf unschiedlichen Belagverschleiß, Reifendrücke und -abnützungen, -alterungserscheinungen. usw. zurückzuführen sind. Daher wird im Abfageschritt 158 im bevorzugten Ausführungsbeispiel das Bremsmoment am linken mit dem am rechten Rad verglichen. Liegt der Betrag der Differenz in einem Toleranzbereich, so ist sichergestellt, daß die Momentenerfassung korrekt ist. Liegt der Betrag der Differenz außerhalb des Toleranzbereichs, wird gemäß Schritt 160 das Steuersignal vorzugsweise für die Radbremse mit dem niedrigeren Momentenwert im Sinne einer Übereinstimmung der Momentewerte an der rechten und linken Radbremse korrigiert. Dies erfolgt im bevorzugten Ausführungsbeispiel durch Korrektur des Sollwerts, kann in anderen Ausführungen auch durch Korrektur des Meßsignals (Istwert) durchgeführt werden. Nach Schritt 158 bzw. 160 wird der Programmteil beendet.

Weisen beide Marken den Wert 1 auf (157), d.h. sind an beiden Radbremsen einer Achse unplausible Abweichungen aufgetreten, wird gemäß Schritt 162 analog zur Vorgehensweise nach Figur 2 und den Schritten 150 bis 160 und 204 bis 228 die fehlerbehafteten Signale durch Vergleich mit den Signale einer anderen Achse (ggf. unter Aufweitung der Toleranzen), vorzugsweise der Signale der Radbremsen unterschiedlicher Fahrzeugsseiten, ermittelt.

Ein dem Programmteil nach Figur 3 entsprechender Programmteil wird für die weiteren Achsen des Fahrzeugs durchgeführt.

Durch die dargestellte Vorgehensweise werden mit geringem Aufwand die Bremsmoment- bzw. Bremskraftinformationen aus gemessenen Signalen und eingesteuerten Signalen (Steller) miteinander verglichen, so daß im Teilbremsfall vier Signalwerte von zwei Rädern derselben Achse miteinander auf unplausible Abweichungen verglichen werden. Soll eine weitere Absicherung der Signalzuverlässigkeit vorgenommen werden, stehen die entsprechenden Signalwerte auch von den Radbremsen der anderen Fahrzeugachsen zur Verfügung. Die Signalzuverlässigkeit kann daher durch Vergleiche mit diesen Signalwerten, ggf. unter Aufweitung des Toleranzbereichs, zusätzlich abgesichert werden.

Neben der dargestellten Lösung ist selbstverständlich in anderen vorteilhaften Ausführungsbeispielen in Schritten 204, 158, usw. ein Vergleich der aus den Bremskraftwerten abgeleiteten Momentenwerte oder der aus den Motorströmen abgeleiteten Momentenwerte vorteilhaft.

Neben der Verwendung des Motorstroms zur Ermittlung des Antriebsmoments wird in einem vorteilhaften Ausführungsbeispiel beim Einsatz von Schrittmotoren oder elektrisch kommutierten Motoren die ausgeführte Schrittzahl SZ als Maß für die Antriebs- und damit für die Bremskraft herangezogen.

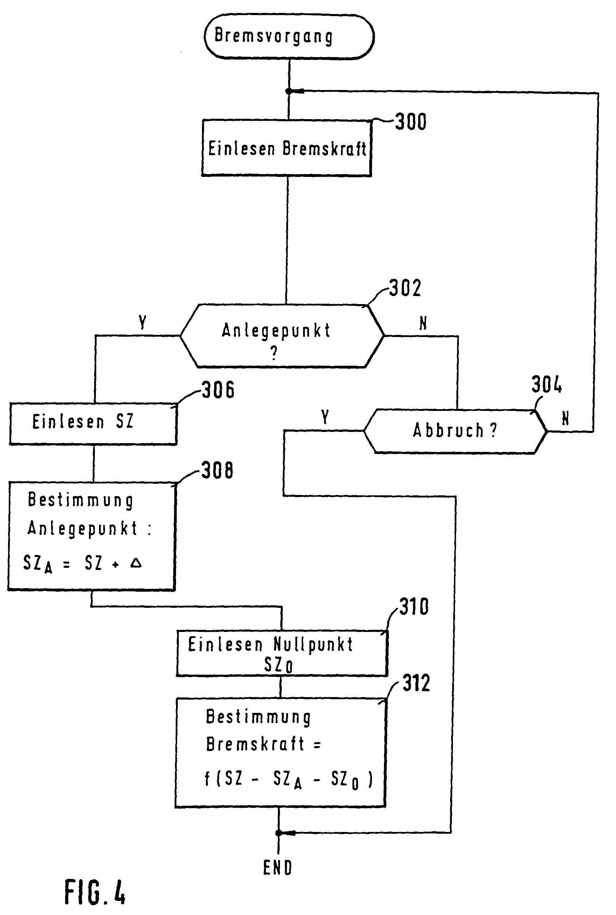

Im Gegensatz zur Verwendung des Motorstroms tritt hierbei jedoch der folgende Sonderfall auf. Insbesondere wegen Verschleiß verschiebt sich beim Einsatz derartiger Zuspanneinrichtungen der Punkt des Bremsenanlegens und -lösens in bezug auf die Schrittzahl. Es ist daher im Zusammenhang mit der Bestimmung der Bremskraft bzw. des Bremsmoments notwendig, laufend diesen Anlege- bzw. Lösepunkt zu bestimmen. Dies erfolgt durch einen wie in Figur 4 skizzierten Programmteil. Dabei kann die Anlegepunktermittlung auch bei Kommutatormotoren eingesetzt werden.

Bei Einleiten eines Bremsvorgangs wird zumindest einmal pro Betriebszyklus der in Figur 4 dargestellte Programmteil aufgerufen. Mit dem Betätigen des Bremspedals wird die Bremsensteuerung aktiviert und von der Steuereinheit 10 eine Bremsbetätigung gemäß der Fahrervorgabe eingeleitet. Zur Bestimmung des Anlegepunktes wird gemäß Figur 4 während dieser ablaufenden Bremsensteuerung gemäß Schritt 300 die anliegende Bremskraft und die Steuergröße eingelesen. Im darauffolgenden Schritt 302 wird anhand des Zusammenhangs zwischen der Bremskraft und/oder der Steuergröße der Anlegepunkt der Radbremse ermittelt. Zu diesem Zweck wird der eingelesene Bremskraftwert mit einem vorgegebenen Grenzwert, der eine Bremsbetätigung kennzeichnet, verglichen. In anderen vorteilhaften Ausführungsbeispielen wird ein Knick im Bremskraftverlauf zur Erkennung des Anlegepunkts herangezogen oder aufgrund des Zusammenhangs zwischen Bremskraft und Steuergröße (Kennlinie) der Anlegepunkt extrapoliert (Bremskraft 0) . Wird im Schritt 302 der Anlegepunkt nicht erkannt, wird im Schritt 304 überprüft, ob der Programmteil abzubrechen ist. Dies ist beispielsweise dann der Fall, wenn der Anlegepunkt während einer vorbestimmten Zeitdauer nicht erkannt oder der Bremsvorgang abgebrochen wurde. Liegt die Abbruchbedingung nicht vor, wird der Programmteil mit Schritt 300 wiederholt.

Wurde im Schritt 302 der Anlegepunkt erkannt, wird im Schritt 306 der gerade vorliegende Schrittzählerstand SZ oder Stromwert erfaßt und im Schritt 308 der Anlegepunkt der Bremse SZA auf der Basis des eingelesenen Schrittzählers SZ und ggf. eines Toleranzwertes Δ abgespeichert. Daraufhin wird im Schritt 310 der Nullpunkt des Schrittzählers bei gelöster Bremse und logelassenem Bremspedal (Fahrerwunsch Null) SZ0 eingelesen und im Schritt 312 bzw. in dem Steuerungprogramm die Bremskraft aus dem aktuellen Schrittzählerstand SZ, von dem Anlegepunkt SZA und Nullpunkt SZ0 subtrahiert werden, abgeleitet.

Entsprechend wird zur Bestimmung des Lösepunktes vorgegangen.

## Patentansprüche

1. Bremseinrichtung mit elektromotorischen Bremsen eines Fahrzeugs mit wenigstens zwei Rädern,
- mit jeder Radbremse zugeordneten, wenigstens einen Elektromotor (16, 18) und einen Steller umfassende elektromotorischen Stelleinrichtung (20, 22),
- mit einer Steuereinrichtung (10),
- welche mittels Ansteuersignale die Stelleinrichtungen (20, 22) der Radbremsen betätigt,
- der erste, gemessene Größen (Fbrems) bezüglich der an den Rädern wirkenden Bremsmomente bzw. Bremskräfte und zweite, von der Steuereinrichtung beeinflußte Größen (I, SZ) der Stelleinrichtungen, welche ebenfalls die an den Rädern wirkenden Bremsmomente bzw. Bremskräfte repräsentieren, zugeführt werden,
dadurch gekennzeichnet, daß
die Steuereinrichtung (10) Mittel (104, 204, 158) aufweist, welche auf der Basis der ersten und der zweiten Größen (Fbrems, I, SZ) unzulässigen Abweichungen zwischen diesen Größen erkennen und einen Fehlerzustand feststellen.

2. Bremseinrichtung nach Anspruch 1, dadurch gekennzeichnet, daß das Bremsmoment bzw. die Bremskraft von Meßeinrichtungen (40, 42) erfaßt werden, die die Abstützkraft der Stelleinrichtungen (20, 22) erfaßt, Meßeinrichtungen (40, 42), die die Anpreßkraft der Bremsbeläge oder Meßeinrichtungen (40, 42), die die Bewegung der Bremsbeläge oder von Betätigungshebeln der Radbremsen erfassen.

3. Bremseinrichtung nach einem der vorhergehenden Ansprüche, dadurch gekennzeichnet, daß die zweite Größe (I, SZ) die der Stelleinrichtung (20, 22) zugeführte Ansteuersignalgröße, der durch den Motor (16, 18) der Stelleinrichtung (20, 22) fließende Strom (I), oder die Schrittzahl (SZ) dieses Motors (16, 18) darstellt.

4. Bremseinrichtung nach einem der vorhergehenden Ansprüche, dadurch gekennzeichnet, daß bei unzulässiger Abweichung der beiden Größen an einem Rad ein Vergleich auf der Basis der Größen mit den entsprechenden Größen der zweiten Radbremse derselben Achse erfolgt zur Ermittlung der fehlerbehafteten Größe.

5. Bremseinrichtung nach einem der vorhergehenden Ansprüche, dadurch gekennzeichnet, daß durch Vergleiche auf der Basis der ersten und zweiten Größen (Fbrems, I, SZ) von Radbremsen verschiedener Achsen miteinander unzulässige Abweichungen festgestellt werden (158, 204, 210, 224).

6. Bremseinrichtung nach einem der vorhergehenden Ansprüche, dadurch gekennzeichnet, daß die Prüfung auf unzulässige Abweichungen bei Normalbremsungen ohne Eingriff eines Antiblockierreglers oder anderer Zusatzinformationen erfolgt oder bei ABS-Regelung oder anderen Zusatzfunktionen.

7. Bremseinrichtung nach einem der vorhergehenden Ansprüche, dadurch gekennzeichnet, daß aus dem Zusammenhang der zweiten Größe (SZ) mit der wirkenden Bremskraft (Fbrems) der aktuelle Anlege- bzw. Lösepunkt (SZA) ermittelt wird.

8. Bremseinrichtung nach einem der vorhergehenden Ansprüche, dadurch gekennzeichnet, daß bei erkanntem Fehler die fehlerbehaftete Größe ermittelt (208, 220) und bezüglich der weiteren Steuerung der Bremsanlage ausgeschaltet wird.

9. Bremseinrichtung nach einem der vorhergehenden Ansprüche, dadurch gekennzeichnet, daß bei erkanntem Fehler die fehlerbehaftete Größe ermittelt (208, 220) und der Vergleich auf unzulässige Abweichungen bei einer fehlerbehafteten Größe an einer Radbremse aus der entsprechenden Größe der anderen Radbremse derselben Achse und der verbleibenden korrekten Größe dieser Radbremse abgeleitet wird (214, 222).

## Claims

1. Brake system with electromotive brakes of a vehicle having at least two wheels,
- with an electromotive actuating device (20, 22) assigned to each wheel brake and comprising at least one electric motor (16, 18) and one actuator,
- with a control device (10)
- which actuates the actuating devices (20, 22) of the wheel brakes by means of activating signals and
- to which are supplied first, measured quantities (Fbrake) relating to the braking torques or braking forces acting on the wheels and second quantities (I, SZ) from the actuating devices, the said quantities (I, SZ) being influenced by the control device and likewise representing the braking torques or braking forces acting on the wheels,
characterized in that the control device (10) has means (104, 204, 158) which, on the basis of the first and second quantities (Fbrake, I, SZ), recognize inadmissible deviations between these quantities and establish a fault situation.

2. Brake system according to Claim 1, characterized in that the braking torque or braking force are recorded by measuring devices (40, 42) which records the supporting force of the actuating devices (20, 22), measuring devices (40, 42) which record the pressure force of the brake linings or measuring devices (40, 42) which record the movement of the brake linings or of actuating levers of the wheel brakes.

3. Brake system according to one of the preceding claims, characterized in that the second quantity (I, SZ) represents the activating signal magnitude supplied to the actuating device (20, 22), the current (I) flowing through the motor (16, 18) of the actuating device (20, 22) or the step count (SZ) of this motor (16, 18).

4. Brake system according to one of the preceding claims, characterized in that, in the case of an inadmissible deviation between the two quantities on one wheel, a comparison, on the basis of the quantities, with the corresponding quantities of the second wheel brake of the same axle is carried out in order to determine the faulty quantity.

5. Brake system according to one of the preceding claims, characterized in that inadmissible deviations are established (158, 204, 210, 224) by comparisons on the basis of the first and second quantities (Fbrake, I, SZ) of wheel brakes of different axles with one another.

6. Brake system according to one of the preceding claims, characterized in that the test for inadmissible deviations takes place, during normal braking, without an anti-lock controller or other additional information being involved, or during ABS control or other additional functions.

7. Brake system according to one of the preceding claims, characterized in that the current application point or relief point (SZA) is determined from the relation between the second quantity (SZ) and the braking force (Fbrake) taking effect.

8. Brake system according to one of the preceding claims, characterized in that, when a fault is detected, the faulty quantity is determined (208, 220) and is cut out with regard to the further control of the brake system.

9. Brake system according to one of the preceding claims, characterized in that, when a fault is detected, the faulty quantity is determined (208, 220) and the comparison relating to inadmissible deviations in the case of a faulty quantity on one wheel brake is derived from the corresponding quantity of the other wheel brake of the same axle and from the remaining correct quantity of this wheel brake (214, 222).

## Revendications

1. Installation de frein équipée de freins commandés par des moteurs électriques dans un véhicule automobile à au moins deux roues,
• chaque frein de roue comportant au moins un moteur électrique (16, 18) et une installation de réglage (20, 22) à moteur électrique avec un actionneur,
• une installation de commande (10),
- qui actionne par des signaux de commande, les installations de réglage (20, 22) des freins de roue,
- la première installation de réglage recevant des grandeurs mesurées (Fbrems) concernant les couples ou forces de freinage agissant sur les roues et
- la seconde installation recevant les grandeurs (I, SZ), influencées par l'installation de commande et représentant également les couples ou forces de freinage agissant sur les roues,
caractérisée en ce que
l'installation de commande (10) comprend des moyens (104, 204, 158) qui constatent sur la base de la première et seconde grandeur des déviations non autorisées (Fbrems I, SZ) entre ces grandeurs et permet de constater un état de défaut.

2. Installation de frein selon la revendication 1,
caractérisée en ce que
le couple ou la force de freinage sont détectés par des installations de mesure (40, 42) qui détectent la force d'appui des installations de réglage (20, 22), des installations de mesure (40, 42) qui détectent la force de pression des garnitures de frein ou des installations de mesure (40, 42) qui détectent le mouvement des garnitures de frein ou des leviers d'actionnement des freins de roue.

3. Installation de frein selon l'une quelconque des revendications précédentes, caractérisée en ce que la seconde grandeur (I, SZ) représente
- les signaux de commande pour l'installation de réglage (20, 22),
- le courant (I) traversant le moteur (16, 18) de l'installation de réglage (20, 22) ou
- le nombre de pas (SZ) de ce moteur (16, 18).

4. Installation de frein selon l'une quelconque des revendications précédentes,
caractérisée en ce qu'
en cas de déviation non acceptable des deux grandeurs d'une roue, on compare sur la base des grandeurs avec les grandeurs correspondantes du second frein de roue du même essieu pour déterminer la grandeur défectueuse.

5. Installation de frein selon l'une quelconque des revendications précédentes,
caractérisée en ce qu'
en comparant sur la base de la première et de la seconde grandeur (Fbrems, I, SZ) des freins d'essieu différents, on constate des déviations inacceptables entre elles (158, 204, 210, 224).

6. Installation de frein selon l'une quelconque des revendications précédentes,
caractérisée en ce que
le contrôle pour des déviations inacceptables se fait dans le cas de freinages normaux sans intervention du régulateur antiblocage ou d'autres fonctions complémentaires ou d'une régulation (ABS) ou autres fonctions complémentaires.

7. Installation de frein selon l'une quelconque des revendications précédentes,
caractérisée en ce que
la relation entre la seconde grandeur (SZ) et la force de freinage active (Fbrems) détermine le point d'application ou de dégagement (SZA).

8. Installation de frein selon l'une quelconque des revendications précédentes,
caractérisée en ce qu'
en cas de défaut reconnu, on détermine la grandeur entachée d'erreur (208, 220) et on l'exclut de l'installation de frein pour la suite de la commande.

9. Installation de frein selon l'une quelconque des revendications précédentes,
caractérisée en ce qu'
en cas de défaut reconnu, on détermine la grandeur entachée de défaut (208, 220) et la comparaison pour des déviations inacceptables pour une grandeur entachée de défaut sur un frein de roue se détermine à partir des grandeurs correspondantes des autres freins de roue du même essieu et de la grandeur correcte restante de ce frein de roue (214, 222).
